# EUROPEAN PATENT APPLICATION

(11) **EP 4 804 227 A1**
(43) Date of publication of application: **09.09.2026**
(21) Application number: 23957694.5
(22) Date of filing: 02.11.2023
(51) Int. Cl.: H01H 13/14

(54) **INPUT DEVICE**

(71) Applicant: Nintendo Co., Ltd., Kyoto-shi, Kyoto 601-8501 (JP)
(72) Inventor: OKAZAKI, Yuya, Kyoto-shi, Kyoto 601-8501 (JP)
(74) Representative: Bardehle Pagenberg Partnerschaft mbB Patentanwälte Rechtsanwälte
(86) International application number: PCT/JP2023/039649
(87) International publication number: WO 2025/094368

(57) **Abstract**

An input device has: a housing 20 which has a first hole 23a; a button member 51 which extends through the first hole, an operation surface 54 of which protrudes from the first hole to outside of the housing; and an elastic member 30 which is adhered to an outer surface of the housing and the button member, which seals between the housing and the button member, and which does not cover the operation surface.

## Description

### [Technical Field]

The present disclosure relates to an input device.

### [Background Art]

Conventionally, input devices having a keycap which is arranged in an opening formed in a case have been known (for example, PLT 1).

### [Citation List]

### [Patent Literature]

[PTL 1] JP2005-39008A

### [Summary of Invention]

### [Problem to be solved]

In the input device described in PLT 1, since there is a gap between the opening and the keycap, wobbling or misalignment of the keycap could occur.

In light of the problem described above, an object of the present disclosure is to provide an input device in which wobbling and misalignment are less likely to occur.

### [Solution to problem]

The gist of the present disclosure is as follows:
(1) An input device, comprising:
   a housing which has a first hole,
   a button member which extends through the first hole, an operation surface of which protrudes from the first hole to outside of the housing, and
   an elastic member which is adhered to an outer surface of the housing and the button member, which seals between the housing and the button member, and which does not cover the operation surface.
(2) The input device according to above (1), wherein the elastic member is arranged so as to fully surround an outer periphery of the housing.
(3) The input device according to above (2), wherein the housing comprises a front surface on which a display is provided, a rear surface which is positioned on a side opposite the front surface, and a side surface connecting the front surface and the rear surface,
   the first hole is arranged in the side surface, and
   the elastic member is arranged so as to surround the side surface.
(4) The input device according to any one of above (1) to (3), wherein the housing further has a second hole different from the first hole, and
   the elastic member seals the second hole and forms a button portion which extends through the second hole.
(5) The input device according to any one of above (1) to (4), wherein the button member comprises a first back surface, on a side opposite the operation surface, which presses a switch when the operation surface is pressed by a user, and
   the elastic member does not cover the first back surface.
(6) The input device according to any one of above (1) to (5), wherein the button member comprises an operation portion configured to form the operation surface, and a shaft portion protruding in an inward direction toward an inside of the housing from a second back surface of the operation portion on a side opposite the operation surface, and
   the elastic member is adhered to the second back surface.
(7) The input device according to above (6), wherein the button member is arranged such that the second back surface is positioned in an outward direction toward an outside of the housing relative to the first hole.
(8) The input device according to above (6) or (7), wherein the second back surface comprises an inclined surface which is inclined in an inward direction toward the shaft portion, and at least a part of the elastic member is adhered to the inclined surface.
(9) The input device according to any one of above (1) to (5), wherein the button member comprises a second back surface, which is a surface on a side opposite the operation surface, from which a shaft portion protrudes, and a side surface connecting the operation surface and the second back surface, and
   the elastic member is adhered to the side surface.
(10) The input device according to above (9), wherein the elastic member is adhered to the side surface from a first portion which is positioned further outward than the operation surface in a radial direction of the first hole, to a second portion which is positioned further inward than the first portion in the radial direction of the first hole, and in a further outward direction toward an outside of the housing relative to the first portion.
(11) The input device according to any one of above (1) to (10), wherein the button member, the elastic member, and at least a portion of the housing to which the elastic member is adhered are integrally formed by injection molding.

### [Advantageous Effects]

An input device in which wobbling and misalignment are less likely to occur is provided.

### BRIEF DESCRIPTION OF DRAWINGS

FIG. 1 is a front view of a portable game device.
FIG. 2 is a top view of a portable game device.
FIG. 3 is a perspective view of a portable game device.
FIG. 4 is a cross-sectional view around a first button taken along IV-IV of FIG. 2.
FIG. 5 is a cross-sectional view around a second button taken along V-V of FIG. 2.
FIG. 6 is a view schematically showing a three-color molding process performed by a manufacturing device.
FIG. 7 is a view showing how an integral component is manufactured by a manufacturing device in a stepwise manner.
FIG. 8 is a cross-sectional view, similar to FIG. 4(A), around the first button.

### DESCRIPTION OF EMBODIMENTS

The embodiments will be described in detail below with reference to the drawings. Now that in the following explanation, like components have been assigned the same reference sign.

### First Embodiment

### <Configuration of Portable Game Device>

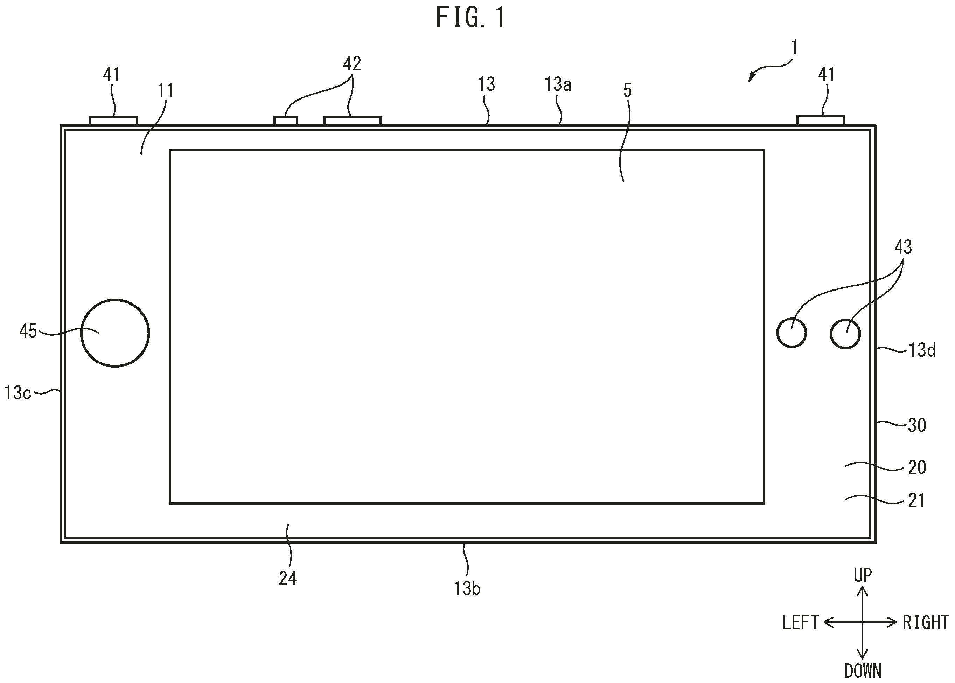

The configuration of a portable game device 1 according to a first embodiment will be described with reference to FIGS. 1 to 3. The portable game device 1 is an example of an input device for input of an operation of a user. The input device may be a device other than the portable game device 1, such as a controller without a display, a tablet terminal, or the like, as long as user operations can be input using buttons.

The portable game device 1 is a game device used for playing games while being held by a user. The user operates buttons 41 to 43 or a joystick 45 provided on the portable game device 1 while looking at a display 5 provided on the portable game device 1. When the user operates the buttons 41 to 43 or the joystick 45, the portable game device 1 performs control of the portable game device 1, and specifically, control of the display on the display 5, control of the sound, etc., based on signals transmitted from detection devices corresponding to the buttons 41 to 43 or the joystick 45.

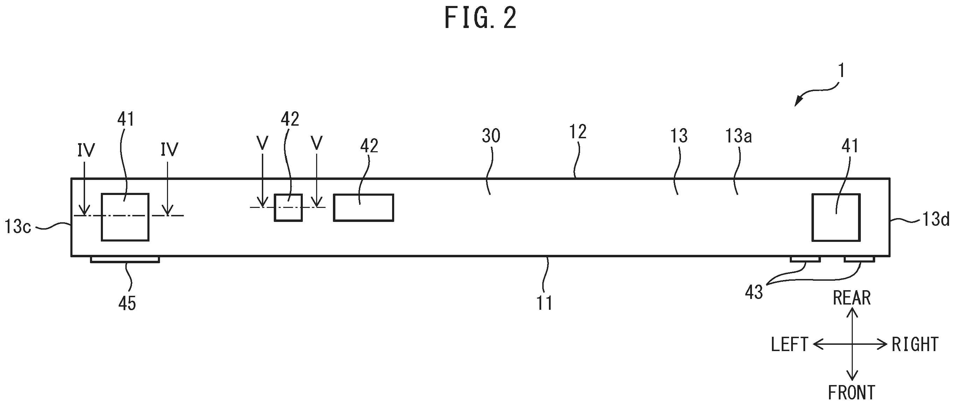

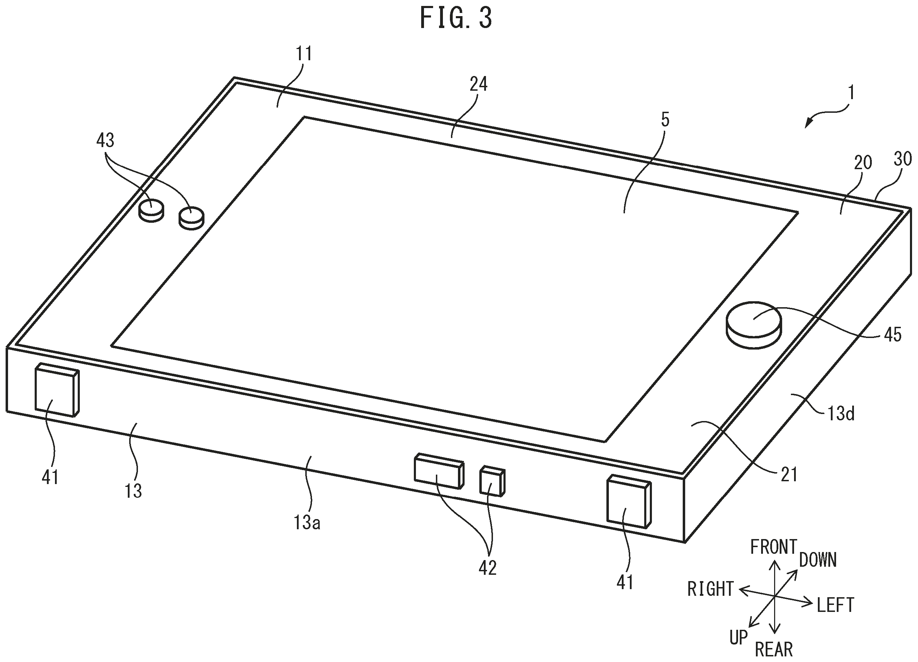

FIG. 1 is a front view of the portable game device 1, FIG. 2 is a top view of the portable game device 1, and FIG. 3 is a perspective view of the portable game device 1.

In the present description, the direction in which the display 5 is provided with respect to the portable game device 1 is referred to as the front, and the direction opposite to the direction in which the display 5 is provided is referred to as the rear. Furthermore, when a user holds and uses the portable game device 1 while looking at the display 5, the upward, downward, left, and right directions as viewed from the front (as viewed from the user) are referred to as the upward, downward, left, and right directions of the portable game device 1, respectively.

As shown in FIGS. 1 to 3, the portable game device 1 comprises a front surface 11 on which the display 5 is provided, a rear surface 12 provided on the side opposite the front surface, and side surfaces 13 formed between the front surface 11 and the rear surface 12 to connect the front surface 11 and the rear surface 12. The side surfaces 13 comprise an upper surface 13a, a lower surface 13b, a left surface 13c, and a right surface 13d. The upper surface 13a is the side surface provided on the upper side of the portable game device 1, and the lower surface 13b is the side surface provided on the lower side of the portable game device 1, and is thus positioned opposite the upper surface 13a. The left surface 13c is the side surface provided on the left side of the portable game device 1, and the right surface 13d is the side surface provided on the right side of the portable game device 1, and is thus positioned opposite the left surface 13c. In the present embodiment, when using the portable game device 1, the user holds the portable game device 1 with the left hand and the right hand from the left surface 13c side and the right surface 13d side, respectively.

In the present embodiment, the front surface 11 of the portable game device 1 is formed so as to be substantially flat over the entirety thereof. Furthermore, in the present embodiment, the front surface 11 of the portable game device 1 has a rectangular shape when viewed from the front, the sides positioned in the upper and lower sides constitute the long sides, and the sides positioned in the left and right sides constitute the short sides. The display 5 is provided in the center of the rectangular front surface 11. The front surface 11 may have any shape other than a rectangle, such as a rounded rectangle or a square.

The side surfaces 13 of the portable game device 1 extend substantially perpendicular to the front surface 11 between the edge of the front surface 11 and the edge of the rear surface 12. In the present embodiment, the upper surface 13a, the lower surface 13b, the left surface 13c, and the right surface 13d are formed substantially flat. Note that when the front surface 11 has a rounded rectangular shape, the upper surface 13a and the lower surface 13b may be curved toward the left surface 13c and the right surface 13d near the left and right ends to match the shapes of the rounded corners of the front surface 11 and the rear surface 12. The side surfaces 13 may also be curved in the front-to-rear direction.

As shown in FIGS. 1 to 3, the portable game device 1 comprises a housing 20 and an elastic member 30 arranged on the outer surface of the housing 20. The circuit boards and electronic components (not illustrated) constituting the portable game device 1 are housed in or attached to the housing 20. The electronic components include a processing device (processor) of the portable game device 1 for controlling the display 5, speakers, etc., in accordance with input from the buttons 41 to 43 or the joystick 45, memory for storing various data used by the processing device, a battery for supplying power to the display 5 and the processing device, etc., and speakers for outputting sound (all of which are not illustrated).

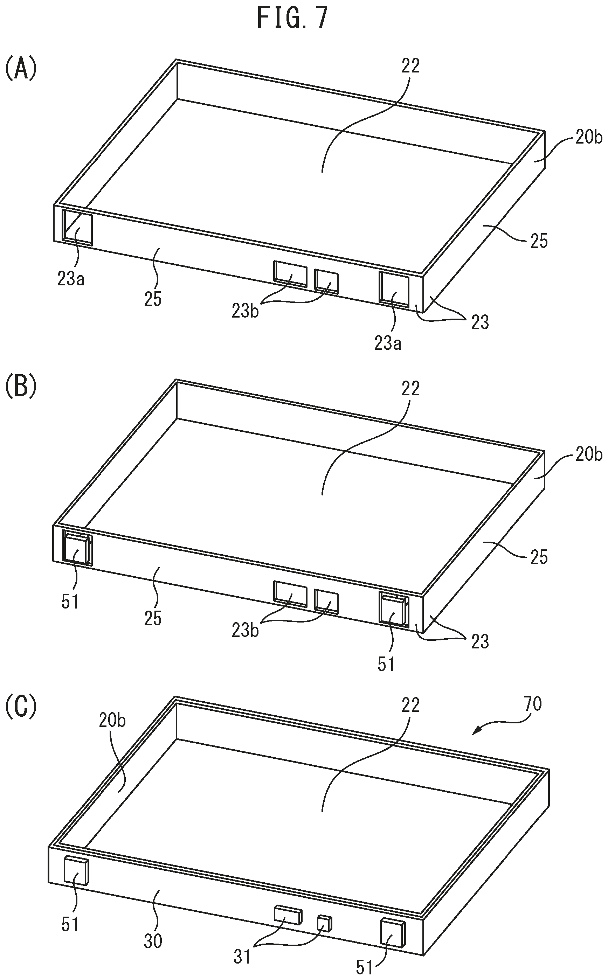

The housing 20 is primarily formed from a metal (for example, iron, stainless steel, aluminum alloy, magnesium alloy, etc.) or a hard resin material (for example, polycarbonate, ABS resin, PC/ABS resin, polyamide, polyacetal, etc.). The housing 20 comprises a front wall 21 provided on the front side of the portable game device 1, a rear wall 22 (refer to FIG. 7) provided on the rear side of the portable game device 1, and a side wall 23 provided in the front-to-rear direction between the front wall 21 and the rear wall 22. The side wall 23 extends around the entire periphery between the edges of the front wall 21 and the rear wall 22. In the present embodiment, the housing 20 comprises a front-side half 20a (refer to FIG. 7(A)) constituting the front wall 21, and a rear-side half 20b in which the rear wall 22 and the side wall 23 are integrally formed, and the housing 20 is formed by attaching the rear-side half 20b to the front-side half 20a. In the present embodiment, the rear-side half 20b is formed from a resin.

The front surface of the front wall 21, and specifically, the front surface 24 of the housing 20, defines the front surface 11 of the portable game device 1. The rear surface of the rear wall 22, and specifically, the rear surface of the housing 20, defines the rear surface 12 of the portable game device 1. Thus, the display 5 is provided on the front surface 24 of the housing 20, and the rear surface of the housing 20 is provided on the side opposite the front surface of the housing 20.

The outer surface of the side wall 23, and specifically, the side surfaces 25 of the housing 20, connects the front surface 24 of the housing 20 to the rear surface of the housing 20. The side surfaces 25 of the housing 20 extend substantially perpendicular to the front surface 24 between an edge of the front surface 24 of the housing 20 and an edge of the rear surface of the housing 20. The side surfaces 25 of the housing 20 have shapes corresponding to the side surfaces 13 of the portable game device 1. In the present embodiment, since each of the four side surfaces 13 of the portable game device 1 is formed substantially flat, each of the four side surfaces 25 of the housing 20 is also formed substantially flat.

In the present embodiment, elastic member 30 is arranged on the side surfaces 25 of the housing 20. The elastic member 30 is formed of an elastic material which is more elastic than the material forming the housing 20, such as silicone or an elastomer (for example, a thermoplastic elastomer (TPE) including thermoplastic polyurethane elastomers (TPU), styrene-based thermoplastic elastomers (TPS), olefin-based elastomers (TOP), etc.). In the present embodiment, the elastic member 30 is arranged so as to surround the entireties of the four side surfaces 25 of the housing 20. Thus, in the present embodiment, the elastic member 30 is arranged on the side surfaces 25 of the housing 20 such that the side surfaces 25 of the housing 20 are not visible from the outside. Thus, the elastic member 30 arranged on the upper side wall 23, the elastic member 30 arranged on the lower side wall 23, the elastic member 30 arranged on the left side wall 23, and the elastic member 30 arranged on the right side wall 23 respectively define the upper surface 13a, the lower surface 13b, the left surface 13c, and the right surface 13d of the portable game device 1. Furthermore, the inner surfaces of the elastic member 30 is entirely adhered to the side surfaces 25 of the housing 20.

However, the elastic member 30 needs not necessarily be arranged so as to surround the entireties of the side surfaces 25 of the housing 20. Thus, the elastic member 30 may be partially arranged on the side surfaces 25 of the housing 20. In this case, the elastic member 30 may be arranged so as to entirely surround the side surfaces 25 of the housing 20, or may be partially arranged. An elastic member 30 may also be arranged on, for example, the front surface or rear surface of the housing 20. In any case, the elastic member 30 may be arranged in any position as long as they are arranged around a first button 41 and a second button 42, which will be described later.

Furthermore, as shown in FIGS. 1 to 3, the portable game device 1 comprises the buttons 41 to 43 or the joystick 45, which are used as input parts for input operations related to a program being executed by the processing device. Though the buttons 41 to 43 or the joystick 45 are arranged on the front surface 11 or the upper surface 13a in the present embodiment, they may also be arranged on the rear surface 12 or another side surface 13.

The buttons 41 to 43 are used together with detection devices for detecting changes in the positions of the buttons 41 to 43. When the buttons 41 to 43 are operated by a user, the operation of the user is detected by the detection devices, and the detection devices output signals corresponding to the operation performed by the user. The detection devices corresponding to the buttons 41 to 43 are connected to a processing device by wire or wirelessly, and the signals output from the detection devices are input to the processing device.

The buttons 41 to 43 comprise a first button 41, a second button 42, and a third button 43. In the present embodiment, the first button 41 and the second button 42 are provided on the upper surface 13a. Thus, an elastic member 30 is positioned around the first button 41 and the second button 42. In the present embodiment, two first buttons 41 and two second buttons 42 are provided on the upper surface 13a. The two first buttons 41 are arranged close to the left and right ends of the upper surface 13a and spaced apart from each other. Conversely, the two second buttons 42 are arranged close to each other near the center of the upper surface 13a in the left and right direction. Furthermore, in the present embodiment, the third button 43 is provided on the front surface 11. Thus, an elastic member 30 is not positioned around the third button 43.

In the present embodiment, the first buttons 41 and the second buttons 42 are provided on the upper surface 13a. However, the first buttons 41 and the second buttons 42 may be provided in areas other than the upper surface 13a as long as the area is provided with an elastic member 30. Thus, in the present embodiment, the first buttons 41 and the second buttons 42 may be provided on the lower surface 13b, the left surface 13c, or the right surface 13d. Furthermore, when an elastic member 30 is provided on the front surface 11 or the rear surface of the portable game device 1, the first buttons 41 and the second buttons 42 may be provided on the front surface 11 or the rear surface.

The joystick 45 is used together with a detection device for detecting changes in the position and inclination of the joystick 45. When the joystick 45 is operated by a user, the operation of the user is detected by the detection device, and the detection device outputs a signal corresponding to the operation performed by the user.

### <Configuration of First Button>

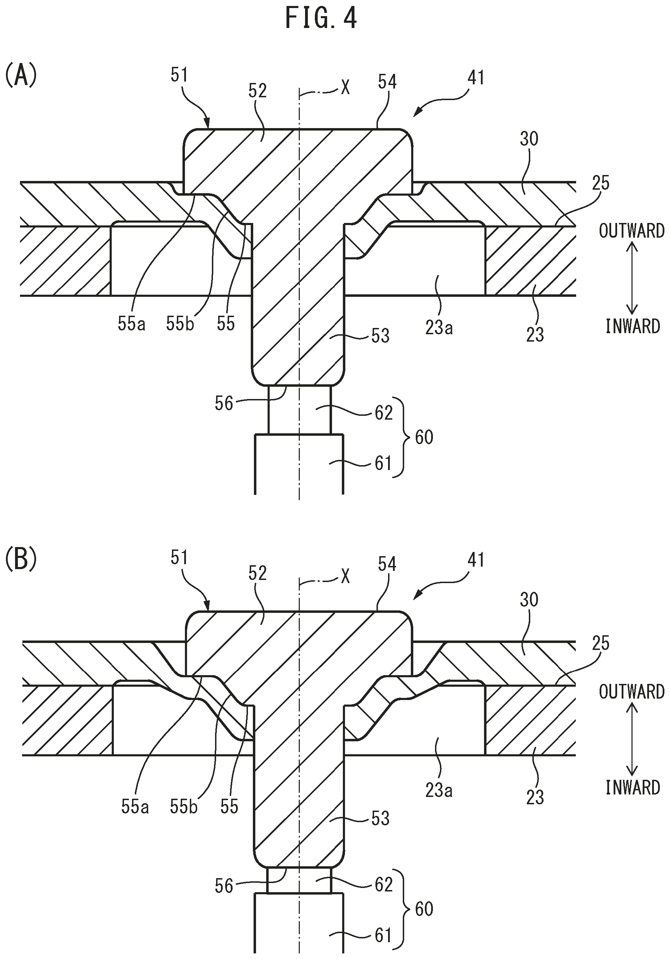

Next, the configuration of the first button 41 will be described with reference to FIG. 4. FIG. 4 is a cross-sectional view around the first button 41 taken along line IV-IV in FIG. 2. FIG. 4(A) shows the first button 41 in a normal state in which it is not being pressed, and FIG. 4(B) shows the first button 41 in a pressed state in which it is being pressed. Note that in the present description, the direction from the inside to the outside of the housing 20 as shown in FIG. 4 is referred to as the outward direction, and the direction from the outside to the inside of the housing 20 is referred to as the inward direction. In the present embodiment, the first button 41 is pressed inward.

In the housing 20, a first hole 23a extending through the housing 20 is formed at the position where the first button 41 is arranged. In particular, in the present embodiment, since the first button 41 is arranged on the upper side wall 23 of the housing 20, the first hole 23a is formed in the upper side wall 23 as shown in FIGS. 4 and 7(A).

As described above, the first button 41 may be provided on the side surfaces 13 other than the upper surface 13a, the front surface 11, or the rear surface. Since the first hole 23a is formed in the position where the first button 41 is arranged, in this case, it is formed in the side wall 23 other than the upper side wall 23, the front wall 21, or the rear wall 22.

As shown in FIG. 4, the first button 41 is constituted by a button member 51 and an elastic member 30 positioned around the button member 51. The button member 51 is arranged so as to extend through the first hole 23a. The button member 51 is made of a material which is harder than the elastic material forming the elastic member 30, for example, the hard resin material forming the housing 20. The elastic member 30 is adhered to the surface of the button member 51.

The button member 51 is formed so as to have an axis X. The button member 51 is arranged such that the direction of the axis X extends inward and outward. The button member 51 is also arranged so as to be movable in the direction along the axis X, and specifically, inward and outward.

The button member 51 comprises an operation portion 52 which is exposed to the outside of the housing 20 and a shaft portion 53 connected to the inward side of the operation portion 52. In the present embodiment, the operation portion 52 is a portion having a rectangular shape when viewed in the direction of the axis X. However, the operation portion 52 may have a shape other than rectangular, such as circular, elliptical, or a cross, when viewed in the direction of the axis X. Furthermore, in the present embodiment, the shaft portion 53 is a cylindrical portion. However, the shaft portion 53 may be a columnar shape having any cross-sectional shape, such as a rectangular column. The center of the cross section of the operation portion 52 and the center of the cross section of the shaft portion 53 are positioned on the axis X. Thus, the operation portion 52 and the shaft portion 53 are formed so as to be coaxial.

The operation portion 52 has an operation surface 54 on an outward side thereof and a back surface 55 on an inward side thereof. Thus, the back surface 55 is formed on the side opposite the operation surface. The operation surface 54 is a surface for operation by a user. Thus, the operation surface 54 is pressed inward by, for example, the finger of the user. In the present embodiment, the operation surface 54 is a flat surface extending perpendicular to the axis X. However, the operation surface 54 may be inclined with respect to the axis X, or may have any shape, such as a concave shape conforming to the shape of a finger. In the present embodiment, the back surface 55 is formed so as to have a flat surface 55a that is perpendicular to the axis X and an inclined surface 55b which is inclined inward toward the shaft portion 53 around the shaft portion 53. However, the back surface 55 may be a flat surface extending perpendicular to the axis X, a surface inclined inward toward the shaft portion 53, or a surface of any shape, such as a surface having concavities and convexities.

The shaft portion 53 is connected to the operation portion 52 so as to protrude inward from the back surface 55. The shaft portion 53 has a tip 56 on the opposite side to the end connected to the operation portion 52. The tip 56 forms the back surface opposite to the operation surface 54.

The elastic member 30 positioned around the button member 51 extends between the outer surface of the side wall 23 of the housing 20 and the button member 51. The elastic member 30 is adhered to the outer surface of the side wall 23 of the housing 20 (and specifically, the outer surface of the housing 20) at least around the first hole 23a. The elastic member 30 is also adhered to the surface of the button member 51. In particular, in the present embodiment, the elastic member 30 is adhered to the back surface 55 of the operation portion 52 of the button member 51, and in particular, to both the flat surface 55a and the inclined surface 55b. As a result, the space between the button member 51 and the side wall 23 of the housing 20 is sealed by the elastic member 30. Note that "sealed" includes not only filling the space between objects but also covering the space between objects. Furthermore, since the elastic member 30 is adhered to the back surface 55 of the operation portion 52 but not to the operation surface 54, the operation surface 54 is exposed to the outside of the housing 20 without being covered by the elastic member 30. Furthermore, since the elastic member 30 is adhered to the back surface 55 of the operation portion 52 but not to the tip 56 of the shaft portion 53, the tip 56 of the shaft portion 53 is also exposed without being covered by the elastic member 30. Furthermore, the button member 51 is held in an appropriate position with respect to the first hole 23a of the side wall 23 of the housing 20 by the elastic member 30.

Furthermore, as shown in FIG. 4(A), the button member 51 is arranged such that the operation surface 54 protrudes outward from the first hole 23a when the first button 41 is not being pressed, which is the normal state. Thus, in the normal state, the operation surface 54 is positioned outside the outer surface of the side wall 23 of the housing 20.

Additionally, as shown in FIG. 4(A), the button member 51 is arranged such that the entire back surface 55 is positioned outward from the first hole 23a in the normal state. Thus, the back surface 55 is positioned outward from the outer surface of the side wall 23 of the housing 20 in the normal state. Note that the button member 51 may be arranged such that only a part of the back surface 55 is positioned outward from the first hole 23a. In this case, only the outer periphery region of the back surface 55 close to the surrounding side wall 23 (and specifically, the region distant from the shaft portion 53) may be positioned outward from the first hole 23a.

Furthermore, as shown in FIG. 4(A), a tactile switch 60 is arranged on the inward side of the button member 51. The tactile switch 60 functions as the detection device for detecting changes in the position of the first button 41, and in particular, changes in the position of the button member 51. The tactile switch 60 comprises a switch body 61 and a plunger 62 which slides relative to the switch body 61. The tactile switch 60 detects changes in the position of the plunger 62 relative to the switch body 61. Note that any type of switch other than the tactile switch 60 can be used as the detection device as long as it can detect changes in the position of the button member 51.

As shown in FIG. 4(A), the button member 51 is arranged such that, in the normal state, the tip 56 of the shaft portion 53 contacts the plunger 62 of the tactile switch 60. At this time, the plunger 62 is not being pressed into the switch body 61. In the pressed state, in which the first button 41 is being pressed by the user, as shown in FIG. 4(B), the button member 51 moves inward, causing the shaft portion 53 to press the plunger 62 into the switch body 61, thereby pressing the tactile switch 60.

In the present embodiment, even in the pressed state, the operation surface 54 of the button member 51 protrudes outward from the outer surface of the side wall 23 of the housing 20. Conversely, in the present embodiment, a part or all of the back surface 55 of the operation portion 52 of the button member 51 is positioned inward from the outer surface of the side wall 23 in the pressed state. However, in the pressed state, the operation surface 54 may be positioned inward from the outer surface of the side wall 23, or the entire back surface 55 may be positioned outward from the outer surface of the side wall 23.

### <Configuration of Second Button>

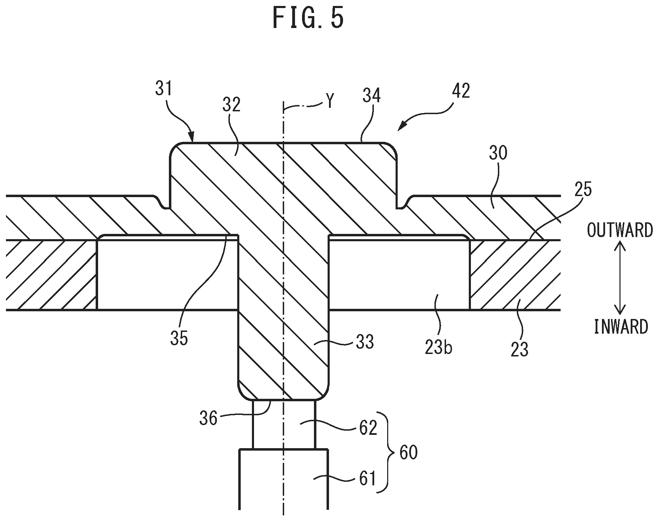

Next, the configuration of the second button 42 will be described with reference to FIG. 5. FIG. 5 is a cross-sectional view around the second button 42 taken along line V-V in FIG. 2. In particular, FIG. 5 shows the second button 42 in the normal state, when not being pressed.

A second hole 23b extending through the housing 20 is formed in the position where the second button 42 is arranged. In particular, in the present embodiment, the second button 42 is arranged on the upper side wall 23 of the housing 20, and thus, the second hole 23b is formed in the upper side wall 23, as shown in FIGS. 4 and 7(A). Note that the second hole 23b may be formed in a side wall 23 other than the upper side wall 23, the front wall 21, or the rear wall 22, as long as it is in the position where the second button 42 is arranged.

As shown in FIG. 5, the second button 42 is formed by the elastic member 30. The second button 42 comprises a button portion 31 extending through the second hole 23b. In other words, the elastic member 30 constitutes the button portion 31.

The button portion 31 is formed so as to have an axis Y. The button portion 31 is arranged such that the direction of the axis Y extends in the inward and outward direction. The button portion 31 is also arranged so as to be movable in the direction along the axis Y, and specifically, in the inward and outward direction.

In the same manner as the button member 51, the button portion 31 also comprises an operation portion 32 and a shaft portion 33. The operation portion 32 of the button portion 31 comprises an operation surface 34 on the outward side thereof and a back surface 35 on the inward side thereof. The operation surface 34 of the button portion 31 is a surface for operation by the user, and in the present embodiment, is a flat surface extending perpendicular to the axis Y. In the present embodiment, the back surface 35 of the button portion 31 is a surface perpendicular to the axis Y. However, the operation surface 34 and the back surface 35 of the button portion 31 may be surfaces of any shapes other than flat surfaces.

The shaft portion 33 of the button portion 31 is formed in the same manner as the shaft portion 53 of the button member 51. Thus, the shaft portion 33 of the button portion 31 is connected to the operation portion 32 so as to protrude inward from the back surface 35. The shaft portion 33 has a tip 36 on the side opposite to the end connected to the operation portion 32, and this tip 36 contacts the plunger 62 of the tactile switch 60 in the normal state.

### <Manufacturing Method>

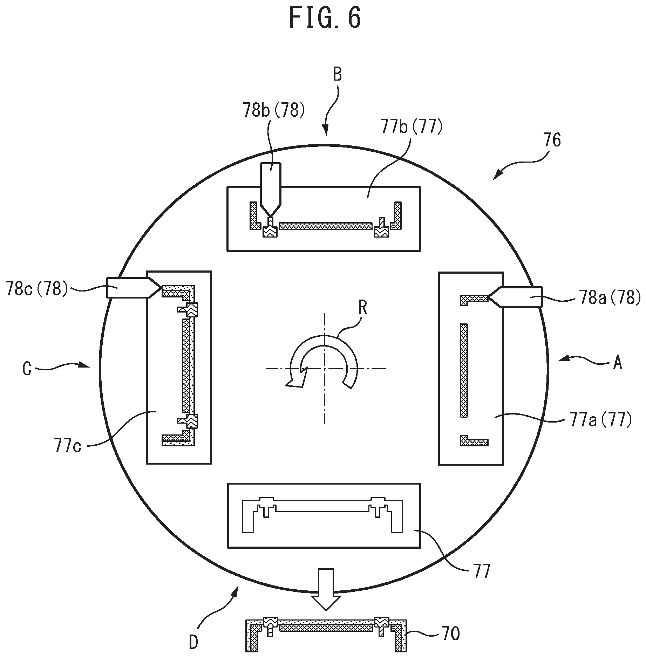

Next, a method for manufacturing an integral component 70 in which the rear-side half 20b of the housing 20 (and specifically, the portion of the housing 20 to which the elastic member 30 adheres), the first button 41, the second button 42, and the elastic member 30 are integral will be described with reference to FIGS. 6 and 7. In the present embodiment, the integral component 70 is integrally manufactured by multi-color integral molding, and in particular, three-color molding. FIG. 6 is a view schematically showing a three-color molding process using a manufacturing device 75. FIG. 7 is a view showing how the integral component 70 is manufactured by the manufacturing device 75 in a stepwise manner.

As shown in FIG. 6, the manufacturing device 75 comprises a rotating pedestal 76, molds 77 attached to the rotating pedestal 76, and three injection molding machines 78 for injecting resin into the molds 77. The rotating pedestal 76 rotates by 90° at a time in the direction of arrow R in the drawing, and one integral component 70 is molded each time the rotating pedestal 76 rotates 360°.

First, at the first rotation position A, the resin for forming the rear-side half 20b of the housing 20 is injected from a first injection molding machine 78a into a first mold 77a. As a result, the rear-side half 20b is molded in the first mold 77a as shown in FIG. 7(A).

Next, at the second rotation position B, where the rotating pedestal 76 is rotated 90° in the R direction from first rotation position A, a second injection molding machine 78b injects resin into a second mold 77b to form the button member 51. The second mold 77b is formed by a mold which is partially identical to the first mold 77a and has substantially the same shape as the first mold 77a, but has an additional space formed therein to accommodate the button member 51. By injection from the second injection molding machine 78b, the button member 51 is molded in the second mold 77b in addition to the rear-side half 20b, as shown in FIG. 7(B).

Next, at the third rotation position C, where the rotating pedestal 76 is rotated another 90° in the R direction from the second rotation position B, a third injection molding machine 78c injects resin into a third mold 77c to form the elastic member 30. The third mold 77c is formed by a mold which is partially identical to the first mold 77a and the second mold 77b, and has substantially the same shape as the second mold 77b, but has an additional space formed therein to accommodate the elastic member 30. By injection from the third injection molding machine 78c, the elastic member 30 is molded in the third mold 77c in addition to the rear-side half 20b and the button member 51 (and thus, the button portion 31 is also molded), as shown in FIG. 7(C), and as a result, the integral component 70 is formed.

Thereafter, the rotating pedestal 76 is rotated another 90° in the R direction from the third rotation position C to the fourth rotation position D, wherein the integral component 70 is removed from the mold 77. The mold 77 is changed from the third mold 77c to the first mold 77a. The rotating pedestal 76 is then rotated again 90° in the R direction to return to the first rotation position A, and molding of a new integral component 70 begins.

In this manner, in the present embodiment, the rear-side half 20b of the housing 20, the first button 41, the second button 42, and the elastic member 30 are integrally formed by injection molding using molds which are partially identical.

Note that in the present embodiment, the rear-side half 20b of the housing 20 is molded at the first rotation position A, and the button member 51 is molded at the second rotation position B, and the rear-side half 20b and the button member 51 are molded at different times. However, the rear-side half 20b and the button member 51 may be molded at the same rotational position simultaneously by different injection molding machines. In this case, the rotating pedestal 76 is rotated in three steps by, for example, 120° each.

### <Effects>

In the above embodiment, the elastic member 30 is adhered to the outer surface of the side wall 23 of the housing 20 and the button member 51, supporting the button member 51 against the side wall 23. Thus, the button member 51 is less likely to wobble or become misaligned. Furthermore, since the operation surface 54 of the button member 51 is not covered by the elastic member 30, the tactile sensation of the first button 41 can be made different from that of the elastic member 30 by appropriately selecting the material of the button member 51. Furthermore, since the elastic member 30 is adhered to the outer surface of the side wall 23, the elastic member 30 is less likely to separate from the side wall 23 when the button member 51 is pressed inward, as compared to the case in which the elastic member 30 is adhered to the inner surface of the side wall 23.

In the above embodiment, the elastic member 30 is arranged so as to surround the outer periphery of the housing 20. As a result, the elastic member 30 is prevented from separating from the housing 20.

Furthermore, in the above embodiment, the elastic member 30 is arranged to surround the entire side surface of the housing 20. In the above embodiment, the user holds the portable game device 1 from the left surface 13c and the right surface 13d, and thus, when the user holds the portable game device 1, the elastic member 30 comes into contact with the hand of the user, facilitating holding of the portable game device 1 by the user.

In the above embodiment, the elastic member 30 constitutes the button portion 31. As a result, the number of parts constituting the button can be reduced, and a button with a tactile sensation which is different from that of the button member 51 can be provided.

Furthermore, in the above embodiment, the elastic member 30 does not cover the tip 56 of the shaft portion 53. As a result, the tip 56 of the shaft portion 53 directly contacts the tactile switch 60 without the elastic member 30 therebetween, providing a solid operational feel when the user presses the button member 51.

In the above embodiment, the elastic member 30 is adhered to the back surface 55 of the operation portion 52. Thus, the operation portion 52 is adhered to the outer surface side of the elastic member 30, and the button member 51 is prevented from separating from the elastic member 30 when the button member 51 is pressed inward.

Furthermore, in the above embodiment, the back surface 55 of the operation portion 52 is positioned outward from the first hole 23a, and specifically, outward from the outer surface of the housing 20. As a result, at least a part of the elastic member 30 between the button member 51 and the outer surface of the housing 20 can extend linearly between them. Thus, the elastic member 30 is prevented from easily bending between the button member 51 and the outer surface of the housing 20.

In the above embodiment, the back surface 55 of the operation portion 52 comprises an inclined surface 55b which is inclined inward toward the shaft portion 53, and the elastic member 30 is adhered to this inclined surface 55b. As a result, the adhesion area between the back surface 55 of the operation portion 52 and the elastic member 30 is increased, whereby the adhesion therebetween can be strengthened.

Furthermore, in the above embodiment, the button member 51, the elastic member 30, and the housing portion (rear-side half 20b) of the housing 20 to which the elastic member 30 is adhered are integrally formed by injection molding. As a result, misalignment due to assembly errors between these parts can be prevented.

### <Modification Example>

In a modification example, a plurality of detection devices may be provided for one button. As a result, the output from the detection devices can be changed depending on not only the degree to which the button is pressed by the finger of the user, but also the location where the button is pressed by the finger of the user. For example, four detection devices may be provided for one cross-shaped button member.

In another modification example, the elastic member 30 may be arranged so as to cover the tip 56 of the shaft portion 53. Furthermore, in another modification example, the front-side half and rear-side half may be constituted in an arbitrary state, such as the front-side half 20a constituting the front wall 21 and the side wall 23, and the rear-side half 20b constituting only the rear wall 22. Additionally, in another modification example, the elastic member 30 may be arranged so as to cover the operation surface 54.

### Second Embodiment

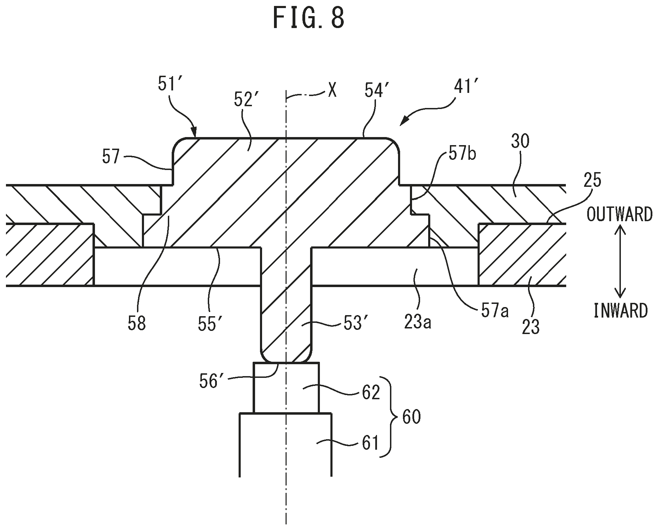

Next, the configuration of the portable game device 1 according to a second embodiment will be described with reference to FIG. 8. The configuration of the portable game device 1 according to the second embodiment is basically the same as the configuration of the portable game device 1 according to the first embodiment. The following description will focus on portions which are different from those of the configuration of the portable game device 1 according to the first embodiment.

FIG. 8 is a cross-sectional view, similar to FIG. 4(A), aound the first button 41'. In the second embodiment, the button member 51' comprises an operation portion 52' which is exposed to the outside of the housing 20 and a shaft portion 53' connected to the inward side of the operation portion 52'. In the present embodiment, the operation portion 52' is also a portion having a rectangular shape when viewed in the direction of the axis X, but may have other shapes.

In the same manner as the operation portion 52 of the first embodiment, the operation portion 52' comprises an operation surface 54' on an outward side thereof and a back surface 55' on an inward side thereof. In the present embodiment, the back surface 55' is a flat surface the entirety of which extends perpendicular to the axis X. In the same manner as the shaft portion 53 of the first embodiment, the shaft portion 53' comprises a tip 56' on the side opposite the end connected to the operation portion 52'. Note that the back surface 55' of the operation portion 52' of the present embodiment may also be formed so as to have a portion which is inclined inward toward the shaft portion 53', in the same manner as the operation portion 52 of the first embodiment.

Additionally, the operation portion 52' comprises a side surface 57 formed between the operation surface 54' and the back surface 55' so as to connect the operation surface 54' and the back surface 55'. In the present embodiment, as shown in FIG. 8, a protrusion 58 which protrudes further in the circumferential direction than the operation surface 54' is formed on the side surface 57. Furthermore, in the present embodiment, the protrusion 58 protrudes inward in a stepped manner in the circumferential direction. Furthermore, in the present embodiment, the protrusion 58 is provided adjacent to the back surface 55'. As a result, the side surface 57 is formed in a stepped manner facing inward. In particular, in the present embodiment, the side surface 57 comprises a first portion 57a positioned further outward than the operation surface 54' in the radial direction of the first hole 23a, and a second portion 57b positioned further inward than the first portion 57 in the radial direction of the first hole 23a, and in a further outward direction relative to the first portion 57. Though the second portion 57b is positioned further outward than the operation surface 54' in the radial direction of the first hole 23a in the present embodiment, it may be positioned at the same position as the edge of the operation surface 54' in the radial direction of the first hole 23a.

The elastic member 30 positioned around the button member 51' extends between the outer surface of the side wall 23 of the housing 20 and the button member 51'. The elastic member 30 is adhered to the outer surface of the side wall 23 of the housing 20 at least around the first hole 23a. The elastic member 30 is also adhered to the surface of the button member 51'. In the present embodiment, the elastic member 30 is adhered to the side surface 57 (including the circumferential surface of the protrusion 58) of the operation portion 52' of the button member 51'. In particular, in the present embodiment, the elastic member 30 is adhered to the first portion 57a, the second portion 57b of the side surface 57, and the stepped portions (outward facing surfaces) therebetween. Note that the elastic member 30 need not be adhered to the first portion 57a or the second portion 57b as long as it is adhered to the stepped portions (outward facing surfaces).

As a result, the gap between the button member 51 and the side wall 23 of the housing 20 is sealed by the elastic member 30. Furthermore, since the elastic member 30 is adhered to the side surface 57 of the operation portion 52' but not to the operation surface 54', the operation surface 54' is exposed to the outside of the housing 20 without being covered by the elastic member 30. Furthermore, since the elastic member 30 is adhered to the side surface 57 of the operation portion 52' but not to the tip 56' of the shaft portion 53', the tip 56' of the shaft portion 53' is also exposed without being covered by the elastic member 30. Furthermore, the button member 51 is held in an optimal position with respect to the first hole 23a of the side wall 23 of the housing 20 by the elastic member 30.

In the second embodiment, the elastic member 30 is adhered to the side surface 57 of the operation portion 52' of the button member 51'. As a result, the connection between the operation portion 52' and the elastic member 30 can be made smoother as compared to the case in which the elastic member 30 is adhered to the back surface 55 of the operation portion 52', in the manner of the first embodiment. In particular, according to the second embodiment, the elastic member 30 is adhered to at least from the first portion 57a to the second portion 57b of the side surface 57 (and specifically, the stepped portion (outward surface) between the first portion 57a and the second portion 57b). As a result, a part of the operation portion 52' is adhered to the inward side of the elastic member 30, which prevents outward disengagement of the button member 51'. Note that the shape of the protrusion 58 is not particularly limited as long as the side surface 57 has a portion which bulges outward from the operation surface 54' in the radial direction of the first hole 23a.

Though the preferred embodiments of the present invention have been described above, the present invention is not limited to these embodiments, and various modifications and changes can be made within the scope of the claims.

## Claims

1. An input device, comprising:
a housing having a first hole;
a button member extending through the first hole, the button member having an operation surface protruding from the first hole to outside of the housing; and
an elastic member adhered to an outer surface of the housing and to the button member, the elastic member sealing between the housing and the button member without covering the operation surface.

2. The input device according to claim 1, wherein the elastic member is arranged so as to fully surround an outer periphery of the housing.

3. The input device according to claim 2, wherein the housing comprises a front surface provided with a display, a rear surface positioned on a side opposite the front surface, and a side surface connecting the front surface and the rear surface,
the first hole is arranged in the side surface, and
the elastic member is arranged so as to surround the side surface.

4. The input device according to any one of claims 1 to 3, wherein the housing further has a second hole different from the first hole, and
the elastic member seals the second hole and forms a button portion which extends through the second hole.

5. The input device according to any one of claims 1 to 4, wherein the button member comprises, on a side opposite the operation surface, a first back surface configured to press a switch when the operation surface is pressed by a user, and
the elastic member does not cover the first back surface.

6. The input device according to any one of claims 1 to 5, wherein the button member comprises an operation portion forming the operation surface, and a shaft portion protruding in an inward direction toward an inside of the housing from a second back surface of the operation portion on a side opposite the operation surface, and
the elastic member is adhered to the second back surface.

7. The input device according to claim 6, wherein the button member is arranged such that the second back surface is positioned in an outward direction toward an outside of the housing relative to the first hole.

8. The input device according to claim 6 or 7, wherein the second back surface comprises an inclined surface inclined in an inward direction toward the shaft portion, and at least a part of the elastic member is adhered to the inclined surface.

9. The input device according to any one of claims 1 to 5, wherein the button member comprises a second back surface from which a shaft portion protrudes, the second back surface being on a side opposite the operation surface, and a side surface connecting the operation surface and the second back surface, and
the elastic member is adhered to the side surface.

10. The input device according to claim 9, wherein the elastic member is adhered to a portion of the side surface, the portion extending from a first portion positioned further outward than the operation surface in a radial direction of the first hole to a second portion positioned further inward than the first portion in the radial direction of the first hole and in a further outward direction toward an outside of the housing relative to the first portion.

11. The input device according to any one of claims 1 to 10, wherein the button member, the elastic member, and at least a portion of the housing to which the elastic member is adhered are integrally formed by injection molding.
